# EUROPÄISCHE PATENTSCHRIFT

(11) **EP 0 799 798 B1**
(45) Veröffentlichungstag und Bekanntmachung des Hinweises auf die Patenterteilung: **16.06.1999**
(21) Anmeldenummer: 97103717.1
(22) Anmeldetag: 06.03.1997
(51) Int. Cl.: C02F 1/28

(54) **Verwendung von Schichtsilikaten**
Use of lammellar silicates
Utilisation de silicates lamellaires

(30) Priorität: 01.04.1996 DE 19613060
(43) Veröffentlichungstag der Anmeldung: 08.10.1997
(73) Patentinhaber: Clariant GmbH, 65929 Frankfurt am Main (DE)
(72) Erfinder: Bauer, Harald, Dr., 50170 Kerpen (DE)

(56) Entgegenhaltungen:
- EP-A- 0 164 514
- EP-A- 0 578 986
- EP-A- 0 615 955
- EP-A- 0 618 592
- EP-B- 0 578 987
- WO-A-97/03018
- FR-A- 1 555 977
- FR-A- 2 658 807
- FR-A- 2 719 304
- US-A- 5 478 389

## Beschreibung

Die Erfindung betrifft die Verwendung von Schichtsilikaten der allgemeinen Formel NaMSiₓO₂ₓ₊₁ · yH₂O, in der x für 1,9 bis 4, M für Na oder H steht und y 0 bis 20 bedeutet, zur Entfernung von Schwermetallen aus wäßrigen Systemen.

Schichtsilikate sind seit längerem bekannt. Sie finden vorteilhaft Verwendung in der Waschmittel- und Reinigungsbranche (vgl. z.B. EP-A-0 164 514); eine Reihe von Schichtsilikaten wird auch als Verdicker oder zur Herstellung von Verdickersystemen für thixotrope Anwendungen eingesetzt.

In der Industrie und im Privathaushalt verwendete wäßrige Systeme, auch Leitungswasser, weisen oft noch einen geringen, aber meßbaren Anteil an Stoffen auf die Wasch- oder Reinigungsvorgänge stören können oder aber die aus ökonomischen und ökologischen Gründen aus dem jeweiligen wäßrigen System entfernt werden müssen. Dies gilt insbesondere für Schwermetalle, die beispielsweise auf peroxidhaltige Zusammensetzungen, wie sie vielfach in Waschmitteln anzutreffen sind, eine zersetzende Wirkung ausüben.

Es ist Aufgabe der vorliegenden Erfindung, ein Mittel bereitzustellen, mit dem Schwermetalle aus wäßrigen Lösungen entfernt werden können.

Gelöst wird diese Aufgabe durch die Verwendung von Schichtsilikaten der allgemeinen Formel NaMSiₓO₂ₓ₊₁ · yH₂O, in der x für 1,9 bis 4, M für Na oder H steht und y 0 bis 20 bedeutet, zur Entfernung von Schwermetallen aus wäßrigen Systemen.

Bevorzugt handelt es sich bei den Schwermetallen um Mangan, Kupfer und/oder Zink.

Bevorzugt weist das wäßrige System einen pH-Wert von 7 bis 13 auf, insbesondere von 8 bis 12 und besonders bevorzugt von 9,3 bis 11,5.

Bevorzugt beträgt die Wasserhärte im wäßrigen System 0 bis 43 Grad deutscher Härte.

Besonders bevorzugt beträgt die Wasserhärte im wäßrigen System 2 bis 30 Grad deutscher Härte.

Insbesondere beträgt die Wasserhärte im wäßrigen System 5 bis 20 Grad deutscher Härte.

Bevorzugt entstammt das wäßrige System aus Waschlaugen, Flotten von Geschirrspülmaschinen, Abwasser, Industrieabwasser, Kühlwasser, Reinigungswasser oder sonstigen wäßrigen Systemen. Es kann sich aber auch um Leitungswasser handeln, insbesondere um solches, welches für Toilettenspülungen, Kühlsysteme oder auch für die Wäsche benutzt werden kann. Ein solches Leitungswasser muß nicht unbedingt die Trinkwassernorm erfüllen.

Bevorzugt enthält das wäßrige System Waschhilfsstoffe, Tenside, Bleichaktivatoren, Bleichsysteme, Vergrauungsinhibitoren, Builder oder Buildersysteme, Enzyme, optische Aufheller, Schaumregulatoren, Füllstoffe und/oder Polymere.

Bevorzugt handelt es sich bei den Tensiden um anionische und/oder nichtionische Tenside.

Ebenfalls bevorzugt handelt es sich bei den Tensiden um nichtionische und/oder kationische Tenside.

Bevorzugt handelt es sich bei den Füllstoffen um Natriumsulfat.

Bevorzugt handelt es sich es sich bei den Polymeren um homopolymere bzw. copolymere Carbonsäuren oder deren Salze.

Bei den Carbonsäuren sind Acrylsäure, Methacrylsäure und/oder Maleinsäure oder deren Salze bevorzugt.

Bei den Buildern und/oder Buildersystemen handelt es sich bevorzugt um Zeolith A oder P, Citronensäure, Natriumcitrat, Natriumtripolyphosphat, Natriumcarbonat, Natriumhydrogencarbonat und/oder organische Builder wie Nitriloessigsäure oder deren Salze.

Builder und Buildersysteme, wie sie zuvor genannt wurden, haben - vor allem in Waschmitteln - verschiedene Aufgaben. Primär reduzieren sie die im Leitungswasser enthaltene Wasserhärte. Diese besteht aus löslichen Calcium- und Magnesiumsalzen, die bei der üblichen Erwärmung der Wasch- oder Spüllauge unter anderem zur Kalkbildung führen. Diese unlöslichen Verbindungen bedingen Verkrustungen in den Wäschetextilien oder Beläge auf Geschirr und Besteckteilen. Ebenfalls kann die Wasch- oder Geschmirrspülmaschine durch solche Beläge bzw. Verkrustungen geschädigt werden. Besonders gefährdet sind die Heizstäbe, da sie die eigentliche Wärmequelle in einer solchen Maschine darstellen.

Calcium- und Magnesiumionen können insbesondere mit anionischen Tensiden, wie sie üblicherweise in Wasch- und Spülmitteln enthalten sind, unlösliche Verbindungen eingehen. Dadurch wird die Waschkraft verringert und die Waschwirkung beeinträchtigt. Zudem lagern sich diese unlöslichen Verbindungen, wie der vorgenannte Kalk, in den Textilien ab, was sowohl eine Beeinträchtigung des Tragekomforts als auch der Lebensdauer der Textilien zur Folge hat.

Durch die Verringerung oder Entfernung der Calcium- und Magnesiumionen aus solchen Laugen wird die Waschkraft bzw. der Spüleffekt in einem solchen System wesentlich gesteigert.

Werden wäßrige Systeme verwendet, die aus Waschmittel(ab)wässern Maschinengeschirrspül(ab)wässern oder ähnlichen Waschlaugen stammen, so können diese unter anderem die folgenden Stoffe enthalten:

Tenside: zu den anionischen oder nichtionischen Tensiden zählen Seifen, Tenside von Sulfonat-und Sulfattyp sowie nichtionische Verbindungen, etwa aus der Klasse der Polyglykoletherderivate. Geeignete Seifen leiten sich von natürlichen oder synthetischen, gesättigten oder einfach ungesättigten Fettsäuren mit 12 bis 22 C-Atomen ab. Bevorzugt sind Seifengemische, die aus Kokos-, Palmkern- oder Talgfettsäuren abgeleitet werden. Vom Sulfonattyp sind lineare Alkylbenzolsulfonate und Olefinsulfonate, aber auch Disulfonate und Alkansulfonate geeignet. Weiterhin α-Sulfofettsäuren und deren Ester, wie etwa die α-sulfonierte und hydrierte Kokos-, Palmkern- oder Talgfettsäure und deren Methyl- oder Ethylester sowie deren Gemische.

Tenside des Sulfattyps sind ebenfalls geeignet. Dabei handelt es sich beispielsweise um Schwefelsäuremonoester aus primären Alkoholen, wie Fettalkohole (Kokosfettalkohole, Talgfettalkohole, Oleylalkohole, Lauryl-, Myrisryl-, Palmetyl- oder Stearylalkohol), sowie die C₁₀- bis C₁₈-Oxoalkohole und die Schwefelsäureester von sekundären Alkoholen entsprechender Kettenlänge. Schwefelsäuremonoester von mit 1 bis 6 mol Ethylenoxid ethoxylierten aliphatischen primären Alkoholen und ethoxylierten sekundären Alkoholen oder Alkylphenole sind auch geeignet. Letztendlich können sulfatierte Fettsäurealkanolamide und sulfatierte Fettsäuremonoglyceride eingesetzt werden.

Wenn die Tenside Sulfonatgruppen enthalten, sind Alkylbenzolsulfonate, α-Sulfofettsäureestersalze oder α-Sulfofettsäureesterdisalze bevorzugt. Die anionischen Tenside liegen üblicherweise in Form ihrer Natriumsalze vor.

Unter nichtionischen Tensiden werden primär Anlagerungsprodukte von 2 bis 20 mol Ethylenoxid an 1 mol einer Verbindung mit im wesentlichen 10 bis 20 C-Atomen aus der Gruppe der Alkohole/Alkylphenole benutzt. Weitere, für Waschlaugen geeignete nichtionische Tenside sind Alkylglykoside bzw. Alkylpolyglykoside, die 8 bis 18 C-Atome aufweisen.

Vergrauungsinhibitoren, die von der Phase abgelösten Schmutz in der Waschflotte suspendiert halten, sind im allgemeinen wasserlösliche Kolloide von organischen Verbindungen, wie etwa die wasserlöslichen Salze polymerer Carbonsäuren, Leim, Gelatine, Salze von Ethercarbonsäuren oder Ethersulfonsäuren der Stärke, der Cellulose oder Salze von sauren Schwefelsäureestern der Cellulose oder der Stärke. Ebenfalls sind hierfür geeignet Polyamide, die wasserlösliche saure Gruppen enthalten. Bevorzugt sind Polyvinylpyrolidon, Carboxymethylcellulose (Na-Salz), Methylcellulose und/oder deren Gemische.

Als Bleichmittel sind insbesondere Natriumperborat (Tetrahydrat oder Monohydrat) geeignet, dies gilt auch für Perborax. Ebenfalls verwendet werden können Peroxycarbonate, Peroxypyrophosphate, Citratperhydrate, Harnstoff oder Melaminverbindungen, die persaure Salze liefern, oder aber Persäuren, wie Perbenzoate, Peroxyphthalate, Diperazelainsäure oder Diperdodecandisäure. Auch andere üblich anorganische oder organische Perverbindungen lassen sich gegebenenfalls einsetzen.

Zu den geeigneten Enzymen für Waschlaugen rechnet man Proteasen, Lipasen, Amylasen, Cellulasen und/oder deren Gemische.

Organopolysiloxane, mikrofeine silanisierte Kieselsäure, Paraffine, Wachse, Mikrokristallinwachse aber auch Seifen und deren Gemische sind in vielen Fällen als Schauminhibitoren brauchbar.

Für die nachfolgenden Beispiele wurden Calcium-/Magnesium-Stammlösungen zur Einstellung einer bestimmten Wasserhärte und entsprechende Schwermetall-Stammlösungen hergestellt.

### Herstellung der Ca-/Mg-Stammlösung:

In einen 2-l-Meßkolben werden 18,94 g MgCl₂ · 6H₂O sowie 40,97 g CaCl₂ · 2H₂O eingewogen. Dann wird bei Raumtemperatur mit destilliertem Wasser auf ein Volumen von 2 l aufgefüllt. 5,6 g dieser Stammlösung entsprechen in der späteren Testlösung 78 ppm CaCO₃ (31,234 mg Ca) und 22 mg MgCO₃ (6,343 mg Mg). 22,4 g dieser Stammlösung entsprechen in der späteren Testlösung 312 ppm CaCO₃ (124,936 mg Ca) und 88 mg MgCO₃ (25,372 mg Mg).

### Herstellung der Schwermetall-Stammlösungen:

### a) Mangan

In einen 1l-Meßkolben werden 14,41 mg MnCl₂· 4H₂O eingewogen. Dann wird bei Raumtemperatur mit destilliertem Wasser auf ein Volumen von 1 l aufgefüllt. 5 g dieser Lösung entsprechen in der späteren Testlösung 0,02 ppm Mn.

### b) Kupfer

In einen 1-l-Meßkolben werden 1,6098g CuCl₂ · 2H₂O eingewogen. Dann wird bei Raumtemperatur mit destilliertem Wasser auf ein Volumen von 1 l aufgefüllt. 5 g dieser Lösung entsprechen in der späteren Testlösung 3 ppm Cu.

### c) Zink

In einen 1-l-Meßkolben werden 2,085 g ZnCl₂ eingewogen. Dann wird bei Raumtemperatur mit destilliertem Wasser auf ein Volumen von 1 l aufgefüllt. 5 g dieser Lösung entsprechen in der späteren Testlösung 5 ppm Zn.

### Allgemeine Vorschrift zur Bestimmung des Schwermetallbindevermögens:

In ein 2-l-Becherglas werden entweder jeweils 5 g einer der drei Schwermetall-Stammlösungen oder 5 g von jeder der drei Schwermetall-Stammlösungen eingewogen. Wenn mit Ca/Mg-Mischwasserhärte gearbeitet werden soll, dann werden 5,6 g der Ca/Mg-Stammlösung zur Erzielung von 100 ppm Mischwasserhärte bzw. 22,4 g zur Erzielung von 400 ppm Mischwasserhärte eingewogen. Mit destilliertem Wasser wird bei 1,0 g Buildereinsatz auf 999 g (999,5 g bei 0,5 g Buildereinsatz) aufgefüllt. In einem Wasserthermostat der Fa. Lauda wird die Lösung unter Rühren mit Magnetrührer auf eine Temperatur von 25 °C temperiert. Dann werden 0,5 g bzw. 1,0 g der Substanzprobe in die Lösung gegeben. Der pH-Wert wird mit 0,1 N KOH bzw. 0,1 N HCl auf pH = 10,0 gehalten. Nach genau 10 Minuten (Laborstoppuhr) wird die Lösung über einen Faltenfilter (Fa. Schleicher & Schüll, Typ: ⌀ 320/597½) oder einen 1-l-Druckfilter (PTFE-Filter, Porendurchmesser 0,2 - 0,45 µm, Fa. Schleicher & Schüll oder Fa. Sartorius) filtriert. Es werden 500 g des Filtrates in eine mit Salzsäure gereinigte Glasflasche eingewogen und mit 5 g konzentrierter Salzsäure versetzt. Die Schwermetall-Bestimmung geschieht mit Hilfe der Atomabsorptionsspektroskopie.

In den Beispielen 1 bis 16 wurden die folgenden (Builder-)Substanzen eingesetzt:
(A) Kristallines Natriumdisilikat (SKS-6) der Fa. HOECHST AG, Deutschland, mit einem molaren SiO₂/Na₂O-Verhältnis von 2,0.
(B) Handelsübliches amorphes Natriumdisilikat mit einem molaren SiO₂/Na₂O-Verhältnis von 2,0 und einem Wassergehalt von ca 19 % (bestimmt als Glühverlust).
(C) Handelsübliches Natriumcarbonat-Natriumdisilikat-Gemisch, hergestellt durch Sprühtrocknung von Lösungen von Natriumsilikat und Soda. Das Gemisch enthält ca. 55 Gew.-% Soda, 29 Gew.-% Natriumdisilikat und 16 Gew.-% Wasser.
(D) handelsüblicher Zeolith A.

In den Beispielen 17 bis 20 wurde ein Waschmittel der Zusammensetzung
48 Gewichtsteile kristallines Natriumdisilikat (SKS-6)
15 Gewichtsteile Natriumhydrogencarbonat
15 Gewichtsteile Natriumcarbonat-peroxyhydrat (Percarbonat)
ad 100 Gewichtsteile Zusatzstoffe
eingesetzt. Als Zusatzstoffe wurden TAED, Phosphonat, nichtionisches Tensid, Enzyme, optische Aufheller, Parfüm, Schaumdämpfer und Natriumsulfat eingebracht.

### Beispiel 1

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine Ca/Mg-freie wäßrige Lösung gegeben, die 0,02 ppm Mn enthält. Nachdem wie in der allgemeinen Vorschrift verfahren wurde, werden bei SKS-6 (A) in der Filtratlösung 0,0017 ppm Mn gefunden (B: 0,009 ppm, C: 0,018 ppm, D: 0,001 ppm Mn). Umgerechnet ergibt dies für SKS-6 ein Mn-Bindevermögen von 91,5 % (B: 55 %, C: 10 %, D: 97,5 %).

### Beispiel 2

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine Ca/Mg-freie wäßrige Lösung gegeben, die 3 ppm Cu enthält. Nachdem wie in der allgemeinen Vorschrift verfahren wurde, werden bei SKS-6 (A) in der Filtratlösung 1,8 ppm Cu gefunden (B: 3 ppm, C: 3 ppm, D: 0,005 ppm Cu) . Umgerechnet ergibt dies für SKS-6 ein Cu-Bindevermögen von 40,0 % (B: 0,0 %, C: 0,0 %, D: 99,8 %).

### Beispiel 3

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine Ca/Mg-freie wäßrige Lösung gegeben, die 5 ppm Zn enthält. Nachdem wie in der allgemeinen Vorschrift verfahren wurde, werden bei SKS-6 (A) in der Filtratlösung 0,12 ppm Zn gefunden (B: 4,1 ppm, C: 4,8 ppm, D: 0,05 ppm Zn). Umgerechnet ergibt dies für SKS-6 ein Zn-Bindevermögen von 97,6 % (B: 18,0 %, C: 4,0 %, D: 99,0 %).

### Beispiel 4

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine Ca/Mg-freie wäßrige Lösung gegeben, die 0,02 ppm Mn und 3 ppm Cu und 5 ppm Zn enthält. Nachdem wie in der allgemeinen Vorschrift verfahren wurde, werden bei SKS-6 (A) in der Filtratlösung 0,0019 ppm Mn, 1,8 ppm Cu und 1,1 ppm Zn gefünden (B: 0,019 ppm Mn, 2,9 ppm Cu, 5,2 ppm Zn; C: 0,02 ppm Mn, 2,9 ppm Cu, 4,8 ppm Zn; D: 0,001 ppm Mn, 0,013 ppm Cu, 0,05 ppm Zn). Umgerechnet ergibt dies für SKS-6 ein Schwermetallbindevermögen für Mn von 90,5 %, für Cu von 40,0 % und für Zn von 78,0 % (B: Mn 5,0 %, Cu 3,3 %, Zn 4,0 %; C: Mn 0,0 %, Cu 3,3 %, Zn 4,0 %; D: Mn 97,5 %, Cu 99,6 %, Zn 99,0 %).

### Beispiel 5

Entsprechend der allgemeinen Vorschrift werden jeweils 1,0 g SKS-6 (A) bzw. Zeolith A (D) in eine Ca/Mg-freie wäßrige Lösung gegeben, die 0,02 ppm Mn enthält. Nachdem wie in der allgemeinen Vorschrift verfahren wurde, werden bei SKS-6 (A) in der Filtratlösung 0,0015 ppm Mn gefunden (D: 0,001 ppm Mn). Umgerechnet ergibt dies für SKS-6 ein Mn-Bindevermögen von 92,5 % (D: 97,5 %).

### Beispiel 6

Entsprechend der allgemeinen Vorschrift werden jeweils 1,0 g SKS-6 (A) bzw. Zeolith A (D) in eine Ca/Mg-freie wäßrige Lösung gegeben, die 3 ppm Cu enthält. Nachdem wie in der allgemeinen Vorschrift verfahren wurde, werden bei SKS-6 (A) in der Filtratlösung 1,8 ppm Cu gefunden (D: 0,006 ppm Cu). Umgerechnet ergibt dies für SKS-6 ein Cu-Bindevermögen von 40,0 % (D: 99,8 %).

### Beispiel 7

Entsprechend der allgemeinen Vorschrift werden jeweils 1,0 g SKS-6 (A) bzw. Zeolith A (D) in eine Ca/Mg-freie wäßrige Lösung gegeben, die 5 ppm Zn enthält. Nachdem wie in der allgemeinen Vorschrift verfahren wurde, werden bei SKS-6 (A) in der Filtratlösung 0,24 ppm Zn gefunden (D: 0,02 ppm Zn). Umgerechnet ergibt dies für SKS-6 ein Zn-Bindevermögen von 95,2 % (D: 99,6 %).

### Beispiel 8

Entsprechend der allgemeinen Vorschrift werden jeweils 1,0 g SKS-6 (A) bzw. Zeolith A (D) in eine Ca/Mg-freie wäßrige Lösung gegeben, die 0,02 ppm Mn und 3 ppm Cu und 5 ppm Zn enthält. Nachdem wie in der allgemeinen Vorschrift verfahren wurde, werden bei SKS-6 (A) in der Filtratlösung 0,003 ppm Mn, 1,3 ppm Cu und 0,59 ppm Zn (D: 0,001 ppm Mn, 0,05 ppm Cu, 0,05 ppm Zn) gefunden. Umgerechnet ergibt dies für SKS-6 ein Schwermetallbindevermögen für Mn 85,0 %, für Cu 56,7 % und für Zn 88,2 % (D: Mn 97,5 %, Cu 99,8 %, Zn 99,0 %).

### Beispiel 9

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine wäßrige Lösung gegeben, die 100 ppm Ca/Mg-Mischwasserhärte und 0,02 ppm Mn enthält. Nachdem wie in der allgemeinen Vorschrift verfahren wurde, werden bei SKS-6 (A) in der Filtratlösung 0,001 ppm Mn (B: 0,004 ppm, C: 0,02 ppm, D: 0,0009 ppm Mn) gefunden. Umgerechnet ergibt dies für SKS-6 ein Mn-Bindevermögen von 95,0 % (B: 80,0 %, C: 0,0 %, D: 95,5 %).

### Beispiel 10

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine wäßrige Lösung gegeben, die 100 ppm Ca/Mg-Mischwasserhärte und 3 ppm Cu enthält. Nachdem wie in der allgemeinen Vorschrift verfahren wurde, werden bei SKS-6 (A) in der Filtratlösung 0,08 ppm Cu (B: 0,19 ppm, C: 3 ppm, D: 0,014 ppm Cu) gefunden. Umgerechnet ergibt dies für SKS-6 ein Cu-Bindevermögen von 97,3 % (B: 93,7 %, C: 0,0 %, D: 99,5 %).

### Beispiel 11

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine wäßrige Lösung gegeben, die 100 ppm Ca/Mg-Mischwasserhärte und 5 ppm Zn enthält. Nachdem wie in der allgemeinen Vorschrift verfahren wurde, werden bei SKS-6 (A) in der Filtratlösung 0,09 ppm Zn (B: 1,05 ppm, C: 5 ppm, D: 0,16 ppm Zn) gefunden. Umgerechnet ergibt dies für SKS-6 ein Zn-Bindevermögen von 98,2 % (B: 79,0 %, C: 0,0 %, D: 96,8 %).

### Beispiel 12

Entsprechend der allgemeinen Vorschrift werden jeweils 0,5 g SKS-6 (A), amorphes Natriumdisilikat (B), Natriumcarbonat-Natriumdisilikat-Gemisch (C) und Zeolith A (D) in eine wäßrige Lösung gegeben, die 100 ppm Ca/Mg-Mischwasserhärte, 0,02 ppm Mn, 3 ppm Cu und 5 ppm Zn enthält. Nachdem wie in der allgemeinen Vorschrift verfahren wurde, werden bei SKS-6 (A) in der Filtratlösung 0,0006 ppm Mn, 0,34 ppm Cu und 0,13 ppm Zn (B: 0,016 ppm Mn, 2,2 ppm Cu, 3,5 ppm Zn; C: 0,02 ppm Mn, 3 ppm Cu, 5 ppm Zn; D: 0,0006 ppm Mn, 0,005 ppm Cu, 0,09 ppm Zn) gefunden. Umgerechnet ergibt dies für SKS-6 ein Schwermetallbindevermögen für Mn 97,0 %, für Cu 88,7 % und für Zn 97,4 % (B: Mn 20,0 %, Cu 26,7 %, Zn 30,0 %; C: Mn 0,0 %, Cu 0,0 %, Zn 0,0 %; D: Mn 97,0 %, Cu 99,8 %, Zn 98,2 %).

### Beispiel 13

Entsprechend der allgemeinen Vorschrift werden jeweils 1,0 g SKS-6 (A), amorphes Natriumdisilikat (B), Natriumcarbonat-Natriumdisilikat-Gemisch (C) und Zeolith A (D) in eine wäßrige Lösung gegeben, die 400 ppm Ca/Mg-Mischwasserhärte und 0,02 ppm Mn enthält. Nachdem wie in der allgemeinen Vorschrift verfahren wurde, werden bei SKS-6 (A) in der Filtratlösung 0,0005 ppm Mn (B: 0,001 ppm, C: 0,0011 ppm, D: 0,003 ppm Mn) gefunden. Umgerechnet ergibt dies für SKS-6 ein Mn-Bindevermögen von 97,5 % (B: 97,0 %, C: 94,5 %, D: 85,0 %).

### Beispiel 14

Entsprechend der allgemeinen Vorschrift werden jeweils 1,0 g SKS-6 (A), amorphes Natriumdisilikat (B), Natriumcarbonat-Natriumdisilikat-Gemisch (C) und Zeolith A (D) in eine wäßrige Lösung gegeben, die 400 ppm Ca/Mg-Mischwasserhärte und 3 ppm Cu enthält. Nachdem wie in der allgemeinen Vorschrift verfahren wurde, werden bei SKS-6 (A) in der Filtratlösung 0,005 ppm Cu (B: 0,006 ppm, C: 0,04 ppm, D: 0,03 ppm Cu) gefunden. Umgerechnet ergibt dies für SKS-6 ein Cu-Bindevermögen von 99,8 % (B: 99,8 %, C: 98,7 %, D: 99,0 %).

### Beispiel 15

Entsprechend der allgemeinen Vorschrift werden jeweils 1,0 g SKS-6 (A), amorphes Natriumdisilikat (B), Natriumcarbonat-Natriumdisilikat-Gemisch (C) und Zeolith A (D) in eine wäßrige Lösung gegeben, die 400 ppm Ca/Mg-Mischwasserhärte und 5 ppm Zn enthält. Nachdem wie in der allgemeinen Vorschrift verfahren wurde, werden bei SKS-6 (A) in der Filtratlösung 0,02 ppm Zn (B: 0,02 ppm, C: 0,06 ppm, D: 0,1 ppm Zn) gefunden. Umgerechnet ergibt dies für SKS-6 ein Zn-Bindevermögen von 99,6 % (B: 99,6 %, C: 98,8 %, D: 98,0 %).

### Beispiel 16

Entsprechend der allgemeinen Vorschrift werden jeweils 1,0 g SKS-6 (A), amorphes Natriumdisilikat (B), Natriumcarbonat-Natriumdisilikat-Gemisch (C) und Zeolith A (D) in eine wäßrige Lösung gegeben, die 400 ppm Ca/Mg-Mischwasserhärte, 0,02 ppm Mn, 3 ppm Cu und 5 ppm Zn enthält. Nachdem wie in der allgemeinen Vorschrift verfahren wurde, werden bei SKS-6 (A) in der Filtratlösung 0,0005 ppm Mn, 0,003 ppm Cu und 0,05 ppm Zn (B: 0,0005 ppm Mn, 0,012 ppm Cu, 0,05 ppm Zn; C: 0,0006 ppm Mn, 0,029 ppm Cu, 0,05 ppm Zn; D: 0,0013 ppm Mn, 0,022 ppm Cu, 0,23 ppm Zn) gefunden. Umgerechnet ergibt dies für SKS-6 ein Schwermetallbindevermögen für Mn 97,5 %, für Cu 99,9 % und für Zn 99,0 % (B: Mn 97,5 %, Cu 99,6 %, Zn 99,0 %; C: Mn 97,0 %, Cu 99,0 %, Zn 99,0 %; D: Mn 93,5 %, Cu 99,3 %, Zn 95,4 %).

### Beispiel 17

Entsprechend der allgemeinen Vorschrift werden jeweils 2,35 g des Waschmittels (I) in eine wäßrige Lösung gegeben, die 100 ppm Ca/Mg-Mischwasserhärte und 0,02 ppm Mn enthält. Nachdem wie in der allgemeinen Vorschrift verfahren wurde, werden für das Waschmittel (I) [(A) enthaltend] in der Filtratlösung 0,001 ppm Mn gefunden. Umgerechnet ergibt dies für (A) ein Mn-Bindevermögen von 95 %.

### Beispiel 18

Entsprechend der allgemeinen Vorschrift werden jeweils 2,35 g des Waschmittels (I) in eine wäßrige Lösung gegeben, die 100 ppm Ca/Mg-Mischwasserhärte und 3 ppm Cu enthält. Nachdem wie in der allgemeinen Vorschrift verfahren wurde, werden für das Waschmittel (I) [(A) enthaltend] in der Filtratlösung 0,174 ppm Cu gefunden. Umgerechnet ergibt dies für (A) ein Cu-Bindevermögen von 94,2 %.

### Beispiel 19

Entsprechend der allgemeinen Vorschrift werden jeweils 2,35 g des Waschmittels (I) in eine wäßrige Lösung gegeben, die 100 ppm Ca/Mg-Mischwasserhärte und 5 ppm Zn enthält. Nachdem wie in der allgemeinen Vorschrift verfahren wurde, werden für das Waschmittel (I) [(A) enthaltend] in der Filtratlösung 0,11 ppm Zn gefunden. Umgerechnet ergibt dies für (A) ein Zn-Bindevermögen von 97,8 %.

### Beispiel 20

Entsprechend der allgemeinen Vorschrift werden jeweils 2,35g des Waschmittels (I) in eine wäßrige Lösung gegeben, die 100 ppm Ca/Mg-Mischwasserhärte, 0,02 ppm Mn, 3 ppm Cu und 5 ppm Zn enthält. Nachdem wie in der allgemeinen Vorschrift verfahren wurde, werden für das Waschmittel (I) [(A) enthaltend] in der Filtratlösung 0,0006 ppm Mn, 0,12 ppm Cu und 0,19 ppm Zn gefunden. Umgerechnet ergibt dies für (A) ein Schwermetallbindevermögen für Mn 97,0 %, für Cu 96,0 % und für Zn 96,2 %.

Gegenüber Zeolith-haltigen Systemen besitzt SKS-6 (A) den Vorteil, daß es auch in solchen Systemen verwendet werden kann, in denen Percarbonate vorliegen (Zeolithe wirken sich negativ auf Percarbonate aus und verringern die Menge - zeitabhängig - an waschaktivem Sauerstoff).

## Patentansprüche

1. Verwendung von Schichtsilikaten der allgemeinen Formel
NaMSiₓO₂ₓ₊₁ · yH₂O
in der x für 1,9 bis 4, M für Na oder H steht und y 0 bis 20 bedeutet, zur Entfernung von Schwermetallen aus wäßrigen Systemen.

2. Verwendung nach Anspruch 1, dadurch gekennzeichnet, daß es sich bei den Schwermetallen um Mangan, Kupfer und/oder Zink handelt.

3. Verwendung nach Anspruch 1 oder 2, dadurch gekennzeichnet, daß das wäßrige System einen pH-Wert von 7 bis 13 aufweist.

4. Verwendung nach Anspruch 3, dadurch gekennzeichnet, daß das wäßrige System einen pH-Wert von 8 bis 12 aufweist.

5. Verwendung nach Anspruch 3, dadurch gekennzeichnet, daß das wäßrige System einen pH-Wert von 9,3 bis 11,5 aufweist.

6. Verwendung nach mindestens einem der Ansprüche 1 bis 5, dadurch gekennzeichnet, daß die Wasserhärte im wäßrigen System 0 bis 43 Grad deutscher Härte beträgt.

7. Verwendung nach Anspruch 6, dadurch gekennzeichnet, daß die Wasserhärte im wäßrigen System 2 bis 30 Grad deutscher Härte beträgt.

8. Verwendung nach Anspruch 6, dadurch gekennzeichnet, daß die Wasserhärte im wäßrigen System 5 bis 20 Grad deutscher Härte beträgt.

9. Verwendung nach einem oder mehreren der Ansprüche 1 bis 8, dadurch gekennzeichnet, daß das wäßrige System aus Waschlaugen, Flotten von Geschirrspülmaschinen, Abwasser, Industrieabwasser, Kühlwasser, Reinigungswasser oder sonstigen wäßrigen Systemen stammt.

10. Verwendung nach einem oder mehreren der Ansprüche 1 bis 9, dadurch gekennzeichnet, daß das wäßrige System Waschhilfsstoffe, Tenside, Bleichaktivatoren, Bleichsysteme, Vergrauungsinhibitoren, Builder oder Buildersysteme, Enzyme, optische Aufheller, Schaumregulatoren, Füllstoffe und/oder Polymere enthält.

11. Verwendung nach Anspruch 10, dadurch gekennzeichnet, daß es sich bei den Tensiden um anionische und/oder nichtionische Tenside handelt.

12. Verwendung nach Anspruch 10, dadurch gekennzeichnet, daß es sich bei den Tensiden um nichtionische und/oder kationische Tenside handelt.

13. Verwendung nach Anspruch 10, dadurch gekennzeichnet, daß es sich bei den Füllstoffen um Natriumsulfat handelt.

14. Verwendung nach Anspruch 10, dadurch gekennzeichnet, daß es sich bei den Polymeren um homopolymere bzw. copolymere Carbonsäuren oder deren Salze handelt.

15. Verwendung nach Anspruch 14, dadurch gekennzeichnet, daß es sich um Acrylsäure, Methacrylsäure und/oder Maleinsäure oder deren Salze handelt.

16. Verwendung nach Anspruch 10, dadurch gekennzeichnet, daß es sich bei den Buildern und/oder Buildersystemen um Zeolith A oder P, Citronensäure, Natriumcitrat, Natriumtripolyphosphat, Natriumcarbonat, Natriumhydrogencarbonat und/oder organische Builder wie Nitriloessigsäure oder deren Salze, handelt.

## Claims

1. The use of sheet silicates of the formula
NaMSiₓO₂ₓ₊₁ · yH₂O
in which x is from 1.9 to 4, M is Na or H and x is from 0 to 20, for removing heavy metals from aqueous systems.

2. The use as claimed in claim 1, wherein the heavy metals are manganese, copper and/or zinc.

3. The use as claimed in claim 1 or 2, wherein the aqueous system has a pH of from 7 to 13.

4. The use as claimed in claim 3, wherein the aqueous system has a pH of from 8 to 12.

5. The use as claimed in claim 3, wherein the aqueous system has a pH of from 9.3 to 11.5.

6. The use as claimed in at least one of claims 1 to 5, wherein the water hardness in the aqueous system is from 0 to 43 degrees of German hardness.

7. The use as claimed in claim 6, wherein the water hardness in the aqueous system is from 2 to 30 degrees of German hardness.

8. The use as claimed in claim 6, wherein the water hardness in the aqueous system is from 5 to 20 degrees of German hardness.

9. The use as claimed in one or more of claims 1 to 8, wherein the aqueous system originates from wash liquors, liquors from dishwashers, effluent, industrial wastewater, cooling water, cleaning water or other aqueous systems.

10. The use as claimed in one or more of claims 1 to 9, wherein the aqueous system contains washing assistants, surfactants, bleach activators, bleach systems, graying inhibitors, builders or builder systems, enzymes, optical brighteners, foam regulators, fillers and/or polymers.

11. The use as claimed in claim 10, wherein the surfactants are anionic and/or nonionic surfactants.

12. The use as claimed in claim 10, wherein the surfactants are nonionic and/or cationic surfactants.

13. The use as claimed in claim 10, wherein the filler is sodium sulfate.

14. The use as claimed in claim 10, wherein the polymers are homopolymeric or copolymeric carboxylic acids or salts thereof.

15. The use as claimed in claim 14, wherein acrylic acid, methacrylic acid and/or maleic acid or salts thereof are present.

16. The use as claimed in claim 10, wherein the builders and/or builder systems are zeolite A or P, citric acid, sodium citrate, sodium tripolyphosphate, sodium carbonate, sodium bicarbonate and/or organic builders, such as nitriloacetic acid or salts thereof.

## Revendications

1. Utilisation de silicates lamellaires de formule générale
NaMSiₓO₂ₓ₊₁ · yH₂O
dans laquelle x est un nombre allant de 1,9 à 4, M représente Na ou H et y est un nombre allant de 0 à 20, pour l'élimination de métaux lourds de milieux aqueux.

2. Utilisation selon la revendication 1, caractérisée en ce que les métaux lourds sont le manganèse, le cuivre et/ou le zinc.

3. Utilisation selon la revendication 1 ou 2, caractérisée en ce que le milieu aqueux est à un pH de 7 à 13.

4. Utilisation selon la revendication 3, caractérisée en ce que le milieu aqueux est à un pH de 8 à 12.

5. Utilisation selon la revendication 3, caractérisée en ce que le milieu aqueux est à un pH de 9,3 à 11,5.

6. Utilisation selon au moins une des revendications 1 à 5, caractérisée en ce que la dureté de l'eau du milieu aqueux est de 0 à 43 degrés de dureté allemande.

7. Utilisation selon la revendication 6, caractérisée en ce que la dureté de l'eau du milieu aqueux est de 2 à 30 degrés de dureté allemande.

8. Utilisation selon la revendication 6, caractérisé en ce que la dureté de l'eau du milieu aqueux est de 5 à 20 degrés de dureté allemande.

9. Utilisation selon une ou plusieurs des revendications 1 à 8, caractérisée en ce que le milieu aqueux provient de bains de lavage, de bains de lave-vaisselle, d'eaux résiduaires, d'eaux résiduaires industrielles, d'eaux de réfrigération, d'eaux de nettoyage ou d'autres milieux aqueux.

10. Utilisation selon une ou plusieurs revendications 1 à 9, caractérisée en ce que le milieu aqueux contient des produits auxiliaires de lavage, des agents tensioactifs, des activateurs de blanchiment, des agents de blanchiment, des inhibiteurs de grisaillement, des adjuvants ou des compositions adjuvantes, des enzymes, des azureurs optiques, des régulateurs du pouvoir moussant, des matières de charge et/ou des polymères.

11. Utilisation selon la revendication 10, caractérisée en ce que les agents tensioactifs sont de nature anionique et/ou non ionique.

12. Utilisation selon la revendication 10, caractérisée en ce que les agents tensioactifs sont de nature non ionique et/ou cationique.

13. Utilisation selon la revendication 10, caractérisée en ce que les matières de charge consistent en sulfate de sodium.

14. Utilisation selon la revendication 10, caractérisée en ce que les polymères sont des acides carboxyliques homopolymères ou copolymères ou leurs sels.

15. Utilisation selon la revendication 14, caractérisée en ce qu'il s'agit d'acide acrylique, d'acide méthacrylique et/ou d'acide maléique ou leurs sels.

16. Utilisation selon la revendication 10, caractérisée en ce que les adjuvants et/ou compositions adjuvantes consistent en zéolite A ou P, acide citrique, citrate de sodium, tripolyphosphate de sodium, carbonate de sodium, bicarbonate de sodium et/ou adjuvants organiques tels que l'acide nitriloacétique ou ses sels.
